# EUROPÄISCHE PATENTSCHRIFT

(11) **EP 2 572 912 B1**
(45) Veröffentlichungstag und Bekanntmachung des Hinweises auf die Patenterteilung: **27.04.2016**
(21) Anmeldenummer: 12183060.8
(22) Anmeldetag: 05.09.2012
(51) Int. Cl.: B60J 7/06, B60J 7/185

(54) **Verschlusskinematik für ein öffnungsfähiges Faltdach**
Closing kinematics for an openable collapsible roof
Cinématique de fermeture pour toit pliant ouvrant

(30) Priorität: 22.09.2011 DE 102011113893
(43) Veröffentlichungstag der Anmeldung: 27.03.2013
(73) Patentinhaber: Magna Car Top Systems GmbH, 74321 Bietigheim-Bissingen (DE)
(72) Erfinder: Käsweber, Hubert, 71636 Ludwigsburg (DE); Reichel, Johannes, 74321 Bietigheim-Bissingen (DE)
(74) Vertreter: Völger, Silke Beatrix

(56) Entgegenhaltungen:
- EP-A2- 1 331 121
- DE-A1-102007 010 317
- DE-A1-102009 009 349
- DE-A1-102009 048 958

## Beschreibung

Die Erfindung bezieht sich auf eine Verschlusskinematik für ein öffnungsfähiges Faltdach in einem Fahrzeug.

In der DE 10 2009 009 349 A1 wird ein öffnungsfähiges Faltdach in einem Fahrzeug beschrieben, das mittels einer Verschlusskinematik in seiner geschlossenen und geöffneten Position zu verstellen ist. Das Faltdach weist ein in seitlichen, aufbaufesten Führungsschienen längsverschieblich gehaltenes vorderes Dachteil auf, das Träger eines Verdeckbezugstoffes ist, wobei bei der Öffnungsbewegung das vordere Dachteil einschließlich Verdeckbezugstoff in den seitlichen Führungsschienen nach hinten verstellt wird. Die Verschlusskinematik umfasst einen in den Führungsschienen verstellbar geführten Kappenschlitten sowie einen Riegelschlitten, der über eine Riegeleinrichtung zwischen einer an der Führungsschiene verriegelten Position und einer freigegebenen Position verstellbar ist. In den Kappenschlitten und den Riegelschlitten ist jeweils eine Führungskulisse eingebracht, in die ein gemeinsamer Lagerbolzen eines die vordere Dachkappe tragenden Kappenlenkers einragt, der anderenends über einen Führungsbolzen aufbauseitig verschwenkbar ist, zugleich aber in der Führungsschiene in Längsrichtung verschiebbar ist. Aufgrund der aufbauseitigen Führungsschwenkachse des Kappenlenkers führt die vordere Dachkappe zu Beginn der Öffnungsbewegung eine Aufschwenkbewegung aus, die von dem Zusammenspiel von Kappenschlitten, Riegelschlitten bzw. dem jeweiligen Verlauf der eingebrachten Kulissen abhängt. Vor der Aufschwenkbewegung ist der Riegelschlitten aufbauseitig verriegelt, anschließend wird der Riegelschlitten freigegeben, so dass der Verbund von Kappen- und Riegelschlitten sowie Kappenlenker und aufgestellter Dachkappe entlang der Führungsschienen nach hinten verstellt werden kann.

DE 10 2007 010317 A1 zeigt eine Verschlusskinematik gemäß dem Oberbegriff des Anspruchs 1.

Der Erfindung liegt die Aufgabe zugrunde, ein Faltdach in einem Fahrzeug mit einfachen konstruktiven Maßnahmen so auszubilden, dass das Faltdach mit verhältnismäßig geringem Kraftaufwand zu öffnen und zu schließen ist.

Diese Aufgabe wird erfindungsgemäß mit den Merkmalen des Anspruches 1 gelöst. Die Unteransprüche geben zweckmäßige Weiterbildungen an.

Die Verschlusskinematik wird zum Öffnen und Schließen von Faltdächern in Fahrzeugen eingesetzt, wobei das Faltdach in seitlichen, aufbaufesten Führungsschienen des Fahrzeuges entlang der Fahrzeuglängsachse verschieblich geführt ist. Zum Öffnen und Schließen wird das Faltdach entlang der Führungsschienen verstellt.

Das Faltdach umfasst zumindest eine vordere Dachkappe, die bei geschlossenem Dach das vorne liegende Dachteil des Faltdaches bildet, sowie einen Verdeckbezugstoff auf, der von dem vorderen Dachteil getragen ist. Zweckmäßigerweise umfasst das Faltdach weitere Kinematikbauteile, insbesondere mehrere sich in Querrichtung erstreckende Querspriegel, die zueinander in Fahrzeuglängsrichtung beabstandet sind und sich zumindest im Wesentlichen parallel zum vorderen Dachteil erstrecken. Auch diese Querspriegel tragen den Verdeckbezugstoff, der mit seinem vorderen Ende an der vorderen Dachkappe und mit seinem hinteren Ende zweckmäßigerweise an einem hinteren, aufbaufest angeordneten Dachteil befestigt ist.

Die Verschlusskinematik umfasst einen in einer der Führungsschienen verschieblichen Antriebsschlitten, der vorteilhafterweise von einer Antriebseinrichtung für die Verstellbewegung in den Führungsschienen angetrieben ist. Die Antriebseinrichtung umfasst beispielsweise einen elektromotorischen Antrieb und ein Zug-Druck-Kabel, über das die Stellbewegung vom Antrieb auf den Antriebsschlitten übertragen wird.

Die Verschlusskinematik umfasst des Weiteren einen verriegelbaren und entriegelbaren Steuerschlitten, der im verriegelten Zustand an den Führungsschienen arretiert und im entriegelten Zustand entlang der Führungsschienen verschieblich ist. Der Antriebsschlitten und der Steuerschlitten sind über einen Kniehebel miteinander verbunden, wobei der Antriebsschlitten über eine Kulissenführung mit dem Kniehebel und der Steuerschlitten zweckmäßigerweise über ein Drehgelenk mit dem Kniehebel verbunden ist.

Darüber hinaus ist der Kniehebel mit einem Trägerteil gekoppelt, das Träger des vorderen Dachteiles ist und insbesondere fest mit dem vorderen Dachteil verbunden ist, so dass das Dachteil die gleiche Bewegung wie das Trägerteil ausführt. Die Bewegung des Kniehebels wird maßgeblich von der Kulissenführung bestimmt, über die der Kniehebel mit dem Antriebsschlitten verbunden ist. Die Kniehebelbewegung wird über die Kopplung mit dem Trägerteil auf das vordere Dachteil übertragen, so dass über die Form der Kulisse, welche Bestandteil der Kulissenführung ist, die Aufstellbewegung des vorderen Dachteiles gesteuert werden kann. Bei einer Aufschwenkbewegung des Kniehebels wird auch das vordere Dachteil bezogen auf die aufbauseitigen Führungsschienen nach oben verschwenkt. Damit ist es möglich, die Schwenkbewegung des vorderen Dachteiles über die Kulissenform entscheidend zu beeinflussen, wobei über den Kniehebel eine Hebelwirkung mit einer Kraftverstärkung erzielt,werden kann, so dass verhältnismäßig klein dimensionierte Antriebe eingesetzt werden können und dennoch sowohl eine Aufstellbewegung des vorderen Dachteils als auch eine Verstellbewegung entlang der Führungsschienen durchgeführt werden kann. Der Vorteil der Hebelübersetzung über den Kniehebel kommt sowohl beim Schließen als auch beim Öffnen des Faltdaches zum Tragen.

Dem Steuerschlitten kommt die Funktion zu, die Bewegung der Verschlusskinematik beim Überführen des Daches von der geschlossenen in die geöffnete Position in eine erste und eine zweite Bewegungsphase zu unterteilen, wobei in der ersten Bewegungsphase der Steuerschlitten aufbaufest verriegelt und in der zweiten Bewegungsphase der Steuerschlitten vom Aufbau entriegelt ist, so dass der Steuerschlitten in den Führungsschienen verfahrbar ist. In der ersten Bewegungsphase, in der sich das vordere Dachteil benachbart zu seiner Schließposition befindet, ist eine Längsverschiebung des Steuerschlittens in den Führungsschienen aufgrund der Verriegelung ausgeschlossen. Der Kopplungspunkt zwischen dem Steuerschlitten und dem Kniehebel ist aufgrund der Verriegelung des Steuerschlittens fixiert, so dass der Kniehebel bei einer Verstellbewegung des Antriebsschlittens eine Dreh- bzw. Schwenkbewegung um den Kopplungspunkt zum Steuerschlitten ausführt und das Trägerteil, welches Träger des vorderen Dachteiles ist, in eine angehobene Position verstellt wird. Mit dem Übergang in die zweite Bewegungsphase wird der Steuerschlitten entriegelt, so dass der Steuerschlitten gemeinsam mit dem Antriebsschlitten entlang der Führungsschienen in Richtung Öffnungsposition verstellt werden kann. Während der Verstellbewegung in Richtung Öffnungsposition behält das Trägerteil bzw. das vordere Dachteil die angehobene Position bei.

Gemäß vorteilhafter Ausführung ist das Trägerteil als Träger des vorderen Dachteils über eine Kulissenführung an einem aufbaufesten Kulissenteil geführt. Das Trägerteil erfährt somit einenends die Kulissenführung im aufbaufesten Kulissenteil und anderenends die Anhebebewegung über den Kniehebel, welcher vom Antriebsschlitten betätigt und vom Steuerschlitten in Position gehalten wird. Die Führung des Trägerteils im aufbaufesten Kulissenteil, das fest mit der Führungsschiene verbunden ist, und die Stellbewegung über den Kniehebel erfolgt vorteilhafterweise zeitgleich, was eine Anhebebewegung des vorderen Dachteils mit zumindest annähernd gleichbleibender Winkellage ermöglicht. In der angehobenen Position des vorderen Dachelementes kann das Faltdach auf ein kleinstmögliches Maß zusammengeschoben werden, so dass die lichte Öffnung im Fahrzeugdach maximiert ist.

Die Verriegelung und die Entriegelung des Steuerschlittens erfolgt zweckmäßigerweise über ein Riegelelement, das am Steuerschlitten angeordnet ist und in der ersten Bewegungsphase den Steuerschlitten am Aufbau verriegelt. Das Riegelelement ist insbesondere als ein schwenkbar am Steuerschlitten gelagerter Riegelhebel ausgeführt, der zwischen Ver- und Entriegelungsposition eine Schwenkbewegung um ein Drehgelenk am Steuerschlitten ausführt. In der Verriegelungsposition ragt das Riegelelement in eine Ausnehmung ein, die in die Führungsschiene oder ein mit der Führungsschiene verbundenes Bauteil eingebracht ist. In der Entriegelungsposition ist das Riegelelement aus der Ausnehmung in der Führungsschiene herausgehoben, so dass der Steuerschlitten entlang der Führungsschienen verfahrbar ist.

Gemäß weiterer vorteilhafter Ausführung ist an dem Kniehebel eine Rolle gelagert, die bei geschlossenem Faltdach an einer aufbauseitigen Stützfläche abgestützt ist, welche sich vorteilhafterweise an der Führungsschiene befindet. Über die Abstützung der Rolle an der aufbauseitigen Stützfläche kann zum einen in Schließposition des Faltdaches eine Entlastung der Kinematikbauteile der Verschlusskinematik erreicht werden, insbesondere des Riegelelementes zum Verriegeln des Steuerschlittens an den Führungsschienen. Zum andern ermöglicht die Abrollbewegung der Rolle an der Stützfläche beim Schließvorgang eine zusätzliche, überlagerte Vorschubbewegung des Kniehebels, wodurch auch das Trägerteil und das vordere Dachteil eine geringfügige zusätzliche Vorschubbewegung ausführen und die Stoffspannung im Verdeckbezugstoff erhöht wird. Die Stützfläche, an der die Rolle abrollt, befindet sich zweckmäßigerweise an der Führungsschiene, insbesondere an einem axial stirnseitigen Abschnitt der Führungsschiene bzw. einem mit der Führungsschiene verbundenen Bauteil.

Gemäß weiterer zweckmäßiger Ausführung ist vorgesehen, dass die Stützfläche einen ersten Absatz und einen zweiten, hierzu axial versetzten Absatz aufweist, wobei die Rolle beim Schließen des Faltdaches in Kontakt mit beiden Absätzen gelangt. Hierbei wird die Rolle zunächst am ersten Absatz entlanggeführt und gelangt anschließend an den axial versetzten, zweiten Absatz, an dem die Rolle aufliegt, wenn sich das Faltdach in der Schließposition befindet. Der erste und er zweite Absatz liegen vorzugsweise zumindest annähernd parallel zueinander.

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Darstellung eines Fahrzeugdaches mit einem öffnungsfähigen Faltdach, das ein längsverschieblich verstellbares, vorderes Dachteil, mehrere Querspriegel und einen Verdeckbezugstoff umfasst,
- Fig. 2 bis 4: eine Verschlusskinematik zum Anheben und Verstellen des vorderen Dachteiles des Faltdaches zwischen Schließ- und Öffnungsposition, dargestellt in Schließposition (Fig. 2) und in zwei Zeitpunkten zu Beginn der Öffnungsbewegung,
- Fig. 5: in Explosionsdarstellung die Verschlusskinematik,
- Fig. 6: in Seitenansicht ein Antriebsschlitten der Verschlusskinematik,
- Fig. 7: das vordere Dachteil und die Verschlusskinematik in Seitenansicht, dargestellt in Schließposition,
- Fig. 8: eine Fig. 7 entsprechende Darstellung, jedoch ohne ein Trägerteil, welches das vordere Dachteil trägt,
- Fig. 9: in Draufsicht ein Riegelhebel, der schwenkbar an einem Steuerschlitten gelagert ist, mit dem Riegelhebel in einer Verriegelungsposition,
- Fig. 10 bis 12: den Fig. 7 bis 9 entsprechende Darstellungen, jedoch in einer ersten Bewegungsphase der Öffnungsbewegung,
- Fig. 13 bis 15: weitere Darstellungen gemäß den Fig. 7 bis 9 bzw. 10 bis 12, jedoch in einer weiter fortgeschrittenen Bewegungsphase während der Öffnungsbewegung,
- Fig. 16 bis 18: weitere Darstellungen in noch einer weiteren Phase während der Öffnungsbewegung,
- Fig. 19: in Seitenansicht das Faltdach in Öffnungsstellung,
- Fig. 20: in vergrößerter Darstellung eine Stützfläche, an der eine Rolle der Verschlusskinematik abrollen kann.

In den Figuren sind gleiche Bauteile mit gleichen Bezugszeichen versehen.

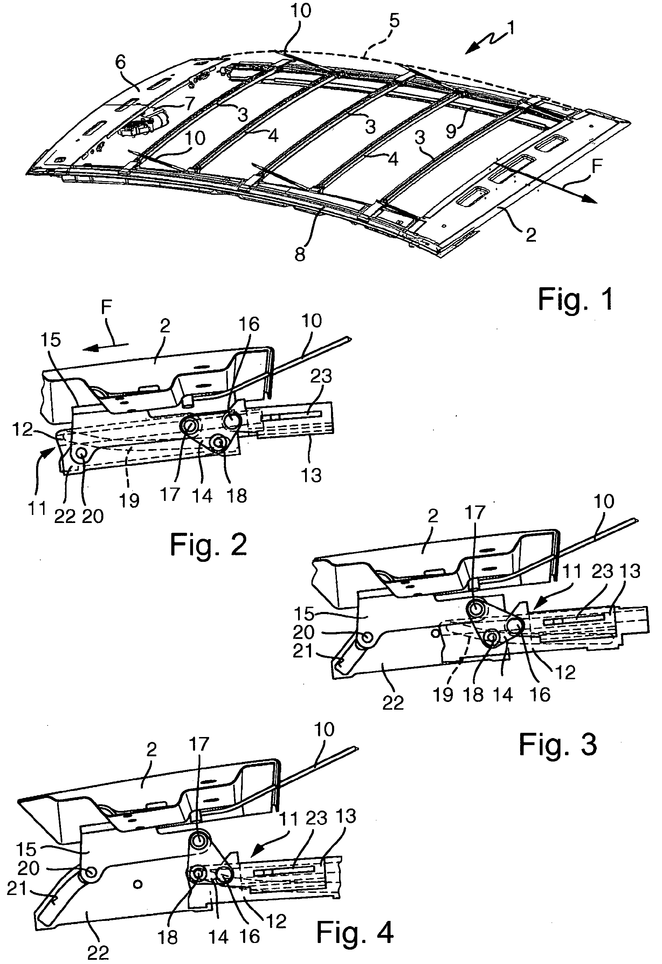

In Fig. 1 ist ein als Faltdach 1 ausgeführtes Fahrzeugdach dargestellt, das als Kinematikbauteile ein vorderes Dachteil 2 sowie mehrere, sich in Querrichtung erstreckende Querspriegel 3 und 4 aufweist, wobei das vordere Dachteil 2 und die Querspriegel 3, 4 Träger eines andeutungsweise dargestellten Verdeckbezugstoffes 5 sind, der am vorderen Dachteil 2 befestigt ist. Die Fahrzeugvorwärtsrichtung ist mit dem Pfeil F gekennzeichnet. Im hinten liegenden Bereich befindet sich ein hinteres Dachteil 6, das karosserie- bzw. aufbaufest gehalten ist und an dem das hintere Ende des Verdeckbezugstoffes 5 befestigt ist. Am hinteren Dachteil 6 ist außerdem eine Antriebseinrichtung 7 zum Verstellen des Faltdaches 1 zwischen geschlossener und geöffneter Position angeordnet. Das Faltdach 1 ist in seitlichen Führungsschienen 8, 9 in Fahrzeuglängsrichtung zum Öffnen und Schließen verstellbar geführt. Das vordere Dachteil 2 ist in den seitlichen Führungsschienen 8, 9 höhenfest verschieblich gehalten, ebenso die Querspriegel 4, wohingegen die weiteren Querspriegel 3 zwar in Längsrichtung verschieblich gehalten sind, jedoch in der Höhe verstellbar sind. Unmittelbar auf das vordere Dachteil 2 folgt ein höhenverstellbarer Querspriegel 3. Die höhenverstellbaren Querspriegel 3 und die höhenfesten Querspriegel 4 wechseln sich in Fahrzeuglängsrichtung ab.

An jedem höhenfest gehaltenen Querspriegel 4 ist ein Federelement 10 angeordnet, das als Federblatt ausgebildet ist und sich in Fahrzeuglängsrichtung nach hinten erstreckt und den unmittelbar folgenden, höhenverstellbaren Querspriegel 3 mit einer nach oben gerichteten Federkraft beaufschlagt. Das Federelement 10 ist im seitlichen Randbereich der Querspriegel angeordnet und mit dem höhenverstellbaren Querspriegel 3 verbunden, so dass dieser bestrebt ist, von den seitlichen Führungsschienen 8, 9, auf denen die höhenverstellbaren Querspriegel 3 aufliegen, abzuheben. Bei geöffnetem Faltdach 1 werden durch die Kraft des Federelementes 10 die höhenverstellbaren Querspriegel 3 nach oben verstellt, so dass der Kontakt zu den seitlichen Führungsschienen 8, 9 aufgehoben ist und die höhenverstellbaren Querspriegel 3 sich in einer erhöhten Position befinden, in welcher die höhenverstellbaren Querspriegel 3 über darunter liegende, höhenfeste Querspriegel 4 bzw. das hintere Dachteil 6 verschoben werden können. Auf diese Weise kann bei geöffnetem Fahrzeugdach in Fahrzeuglängsrichtung eine kompakte Ablage des Faltdaches erzielt werden, so dass die lichte Öffnung entsprechend vergrößert ist.

In Fahrzeuglängsrichtung ist ein Spanngurt geführt, der mit sämtlichen Querspriegeln 3 und 4 verbunden ist und die Aufgabe hat, die höhenverstellbaren Querspriegel 3 bei geschlossenem Fahrzeugdach niederzuhalten, so dass die höhenverstellbaren Querspriegel 3 auf der Oberseite der seitlichen Führungsschienen 8, 9 aufliegen. Durch eine entsprechende Spannung im Spanngurt werden die höhenverstellbaren Querspriegel 3 gegen die Kraft der auf sie wirkenden Federelemente 10 niedergehalten. Die Spannkraft im Spanngurt wird mithilfe einer Spannfeder erzielt, die am hinten liegenden, stirnseitigen Ende der seitlichen Führungsschienen 8 bzw. 9 angeordnet ist. Über die Spannfeder wird bei geschlossenem Fahrzeugdach eine Mindestspannkraft im Spanngurt sichergestellt.

In den folgenden Figuren wird eine Verschlusskinematik 11 im Einzelnen beschrieben, über die das Faltdach zwischen geöffneter und geschlossener Position zu verstellen ist. Die Verschlusskinematik dient auch dazu, zu Beginn der Öffnungsbewegung das vordere Dachteil 2 in eine angehobene Position zu verstellen, in der das vordere Dachteil 2 von den seitlichen Führungsschienen 8, 9 abgehoben ist, wobei während der weiteren Überführungsbewegung bis zum Erreichen der geöffneten Position das vordere Dachteil 2 in der angehobenen Position verbleibt.

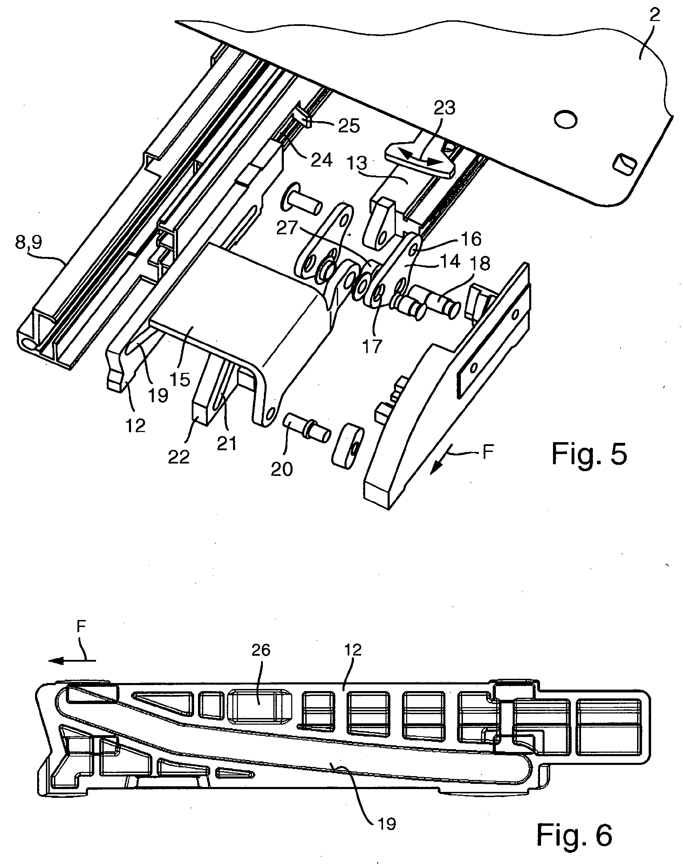

Die Verschlusskinematik 11 umfasst einen Antriebsschlitten 12, einen Steuerschlitten 13 und einen Kniehebel 14, der sowohl mit dem Antriebsschlitten 12 als auch mit dem Steuerschlitten 13 gekoppelt ist. Zur Verschlusskinematik 11 gehört des Weiteren ein Trägerteil 15, das fest mit dem vorderen Dachteil 2 verbunden ist und an dem ebenfalls der Kniehebel 14 angreift. Die Kopplung zwischen dem Kniehebel 14 und dem Steuerschlitten 13 sowie zum Trägerteil 15 erfolgt über Drehgelenke 16 bzw. 17. Die Kopplung zwischen dem Kniehebel 14 und dem Antriebsschlitten 12 erfolgt über eine Kulissenführung mit einem Führungsbolzen 18 am Kniehebel 14 und einer Führungskulisse 19, die in den Antriebsschlitten 12 eingebracht ist. Die Führungskulisse 19 ist in der Seitenansicht des Antriebsschlittens 12 gemäß Fig. 6 im Detail zu erkennen.

Das Trägerteil 15 als Träger des vorderen Dachteils 2 ist außerdem über eine Kulissenführung mit einem aufbauseitigen Karosserieteil 22 gekoppelt, das fest mit der seitlichen Führungsschiene 8 bzw. 9 verbunden ist. Die Kulissenführung umfasst einen Führungsbolzen 20 am Trägerteil 15 und eine Führungskulisse 21 im Karosserieteil 22. Der Führungsbolzen 20 am Trägerteil 15 befindet sich im vorne liegenden Bereich des Trägerteils, das Drehgelenk 17 zur Kopplung mit dem Kniehebel 14 befindet sich im hinteren Teil des Trägerteils 15.

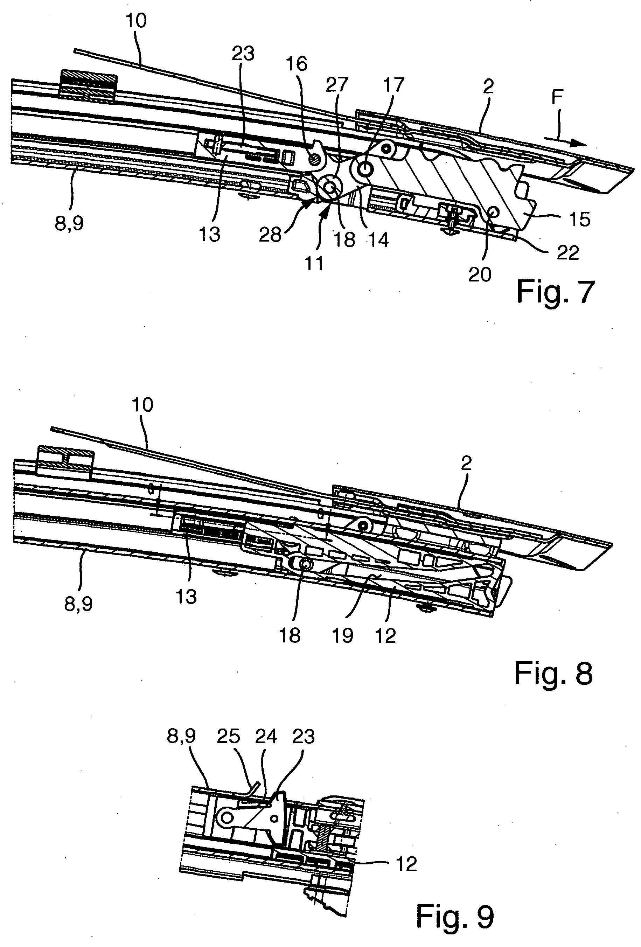

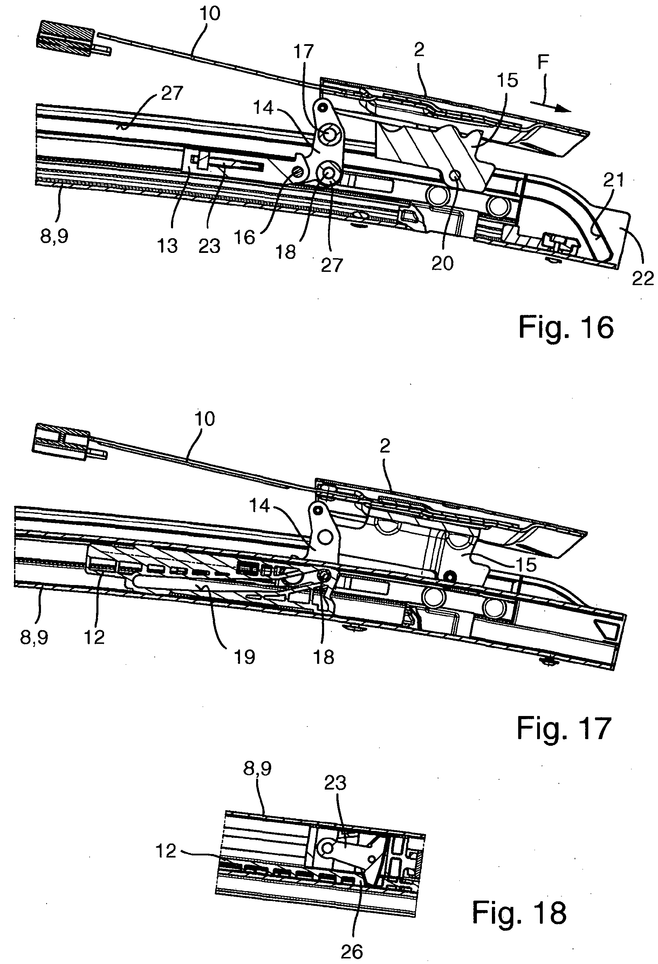

Die Fig. 2 bis 4 zeigen die erste Bewegungsphase während der Öffnungsbewegung des Faltdaches 1, ausgehend von der Schließposition. Hiermit korrespondieren die Fig. 7 bis 15, die ebenfalls das Faltdach bzw. Teile hiervon zu Beginn der Öffnungsbewegung in der ersten Bewegungsphase darstellen. Die Fig. 16 bis 18 zeigen eine sich hieran anschließende, zweite Bewegungsphase während der Öffnungsbewegung. In der ersten Bewegungsphase ist der Steuerschlitten 13 über ein als Riegelhebel 23 ausgebildetes Riegelelement an der seitlichen Führungsschiene 8 bzw. 9 verriegelt. Der Riegelhebel 23 befindet sich, wie Fig. 5 zu entnehmen, auf dem Steuerschlitten 13 und kann in der angezeigten Richtung gemäß Doppelpfeil in Fig. 5 um ein Drehgelenk mit vertikaler Schwenkachse am Steuerschlitten 13 hin und her verschwenkt werden. In der ersten Bewegungsphase ist der Steuerschlitten 13 an den Führungsschienen 8,9 verriegelt, was dadurch erreicht wird, dass der Riegelhebel 23 in eine Ausnehmung 24 in der Führungsschiene 8, 9 eingreift, was auch in den Fig. 9, 12 und 15 dargestellt ist.

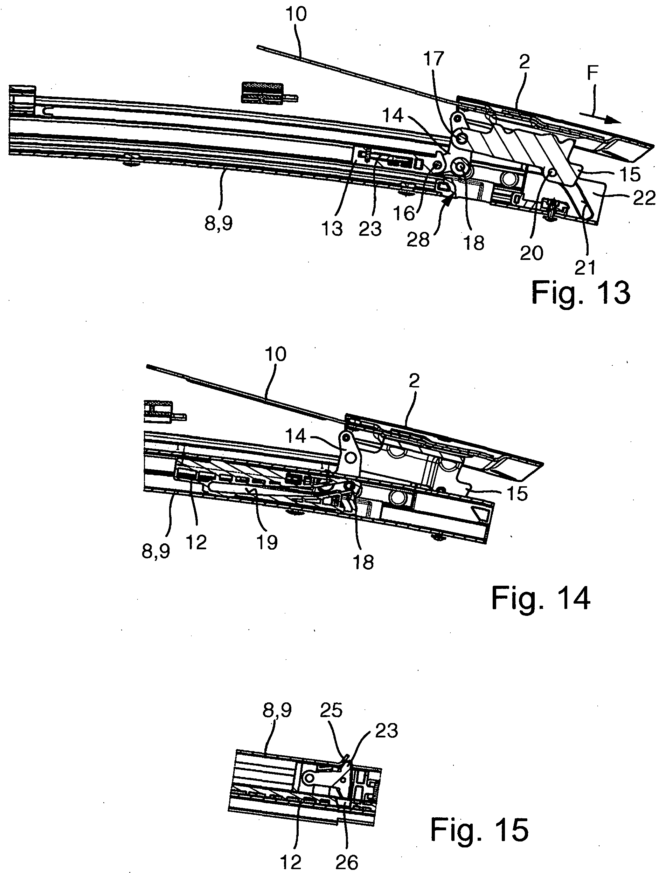

In der zweiten Bewegungsphase sind dagegen der Steuerschlitten 13 und der Riegelhebel 23 entriegelt, was dadurch erreicht wird, dass der Riegelhebel 23 mit einer Anlaufschräge gegen eine aufgebogene Lasche 25 fährt, die an der Führungsschiene 8, 9 angeordnet ist und im Verfahrweg des Riegelhebels 23 liegt. In Fig. 15 ist der Kontakt zwischen dem Riegelhebel 23 und der Lasche 25 gezeigt, woraufhin der Riegelhebel um sein Schwenk- bzw. Drehgelenk in die Gegenrichtung verschwenkt und der Riegelhebel sowie der Steuerschlitten freigegeben sind. Der Riegelhebel 23 schwenkt in Gegenrichtung in eine Ausnehmung 26 am Antriebsschlitten 12 ein (Fig. 6). In der zweiten Bewegungsphase gemäß den Fig. 16 bis 18 ist der Steuerschlitten 13 entriegelt und kann der Verbund aus Antriebsschlitten 12, Steuerschlitten 13, Kniehebel 14 und Trägerteil 15 in den Führungsschienen 8, 9 bis zum Erreichen der Öffnungsposition nach hinten verfahren werden.

In Fig. 2 bzw. den Fig. 7 bis 9 ist die Verschlusskinematik bzw. Teile hiervon in Schließposition dargestellt. In der Schließposition befindet sich das vordere Dachteil 2 in seiner abgesenkten Position. Der Führungsbolzen 20 am Trägerteil 15 liegt an einem vorderen, stirnseitigen Ende der Führungskulisse 21 im aufbaufesten Karosserieteil 22 an. Der Antriebsschlitten 12 ist in seine weitestmöglich vordere Position verstellt, der Führungsbolzen 18 am Kniehebel 14 befindet sich am hinteren Ende der Führungskulisse 19 im Antriebsschlitten 12. Der Antriebsschlitten 12 wird von einer Antriebseinrichtung in den Führungsschienen 8, 9 verstellt; bei der Antriebseinrichtung handelt es sich vorzugsweise um einen Elektromotor und ein Zug-Druck-Kabel zur Übertragung der Stellbewegung auf den Antriebsschlitten.

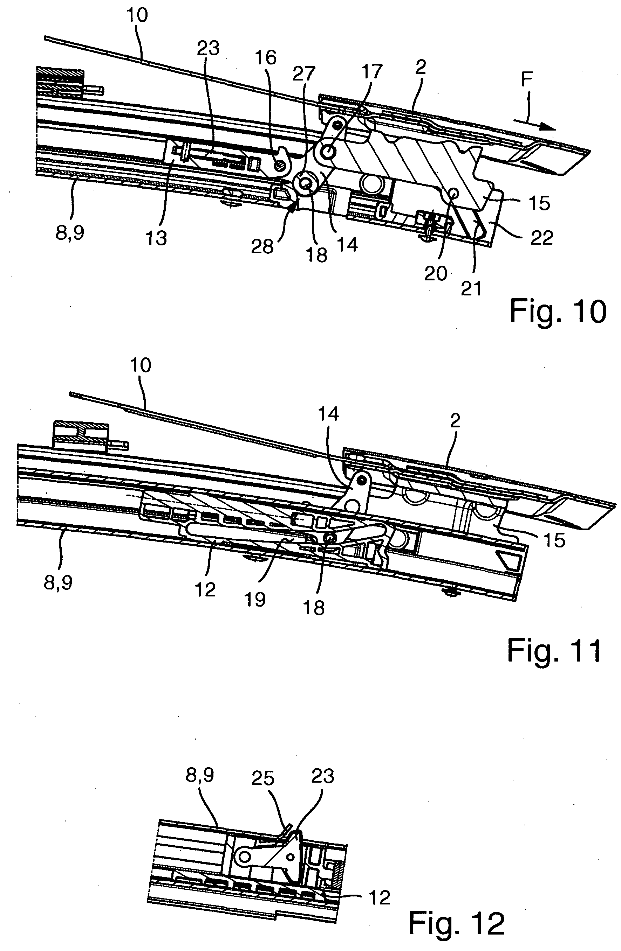

Der Beginn der Öffnungsbewegung wird durch ein Verstellen des Antriebsschlittens 12 nach hinten ausgelöst. Zu Beginn der Öffnungsbewegung wandert zum einen der Führungsbolzen 20 am Trägerteil 15 in der aufbaufesten Führungskulisse 21 nach oben, so wie dies in den Fig. 3, 7, 10 und 13 dargestellt ist. Außerdem wandert der Führungsbolzen 18 am Kniehebel 14 in der Führungskulisse 19 im Antriebsschlitten 12 entlang, was in Fig. 3 sowie in den Fig. 8 und 11 dargestellt ist.

Das Ende der ersten Bewegungsphase ist in den Fig. 4 und 13 bis 15 dargestellt, aus denen zu erkennen ist, dass der Antriebsschlitten 12 so weit nach hinten verschoben ist, dass der Führungsbolzen 18 am vorderen Ende der Führungskulisse 19 anliegt. Die Führungskulisse 19 im Antriebsschlitten 12 steigt von ihrem hinteren Ende zum vorderen Ende an, so dass mit der Position des Führungsbolzens 18 am vorderen Ende der Führungskulisse 19 die maximal aufgeschwenkte Position des Kniehebels 14 und damit auch die maximal angehobene Position des Dachteiles 2 erreicht ist.

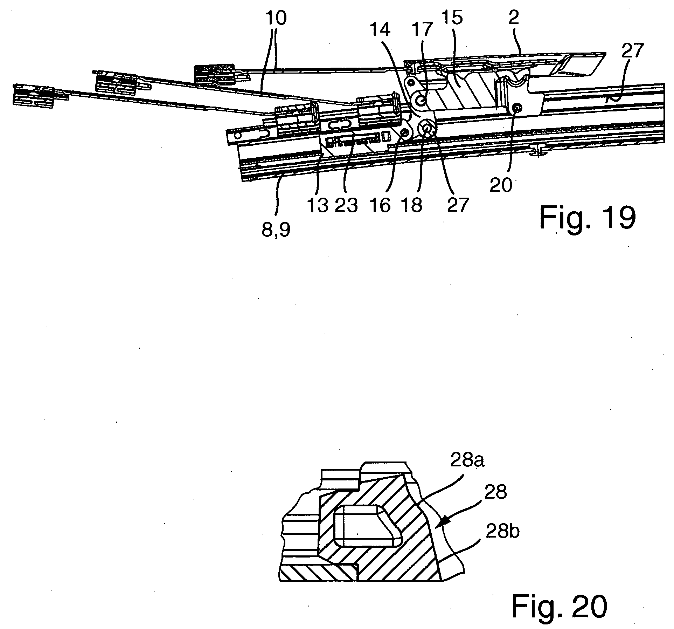

Die Fig. 16 bis 18 stellen die zweite Bewegungsphase dar, in der der Riegelhebel 23 von den Führungsschienen 8, 9 entriegelt ist und stattdessen in Eingriff mit der Ausnehmung 26 im Antriebsschlitten 12 steht. Die zweite Bewegungsphase erstreckt sich bis zum Erreichen der geöffneten Position gemäß Fig. 19. Das vordere Dachteil 2 behält seine angehobene Position bei. Wie Fig. 16 zu entnehmen, geht die Führungskulisse 21 im Karosserieteil 22, welches fest mit der Führungsschiene 8, 9 verbunden ist, in eine Führungsbahn 27 in der Führungsschiene über, in der der Führungsbolzen 20 bis zum Erreichen der Öffnungsposition geführt ist.

In den Fig. 5, 7, 10, 16 und 19 ist eine Rolle 27 dargestellt, die am Kniehebel 14 gelagert ist und die gleiche Achse wie der Führungsbolzen 18 aufweist. Die Rolle 27 stützt sich in der ersten Bewegungsphase und in der Schließposition des Faltdaches an einer Stützfläche 28 ab, die sich an einer der Führungsschienen 8, 9 bzw. einem mit der Führungsschiene 8, 9 verbundenen Bauteil befindet. Die Abstützung erfolgt in Richtung der Längsachse des Fahrzeugs. Die Stützfläche 28 weist zwei Abschnitte auf, die zueinander in Fahrzeuglängsrichtung gesehen axial versetzt sind und sich jeweils winklig zur Fahrzeuglängsrichtung erstrecken. Beim Schließvorgang gelangt die Rolle 27 zunächst in Kontakt mit dem ersten Absatz an der Stützfläche 28, der bezogen auf die Vorderseite des Daches weiter hinten angeordnet ist. Im weiteren Verlauf der Schließbewegung rollt die Rolle 27 weiter an der Stützfläche 28 ab und gelangt in Kontakt mit dem zweiten, weiter vorne liegenden Absatz, wobei diese Position der Rolle 27 an der Stützfläche 28 zugleich die Schließposition markiert. Über die Abstützung der Rolle 27 an der Stützfläche 28 wird zum einen in der Schließposition der Riegelhebel von Kräften entlastet. Zum andern erfährt die Verschlusskinematik und damit auch das vordere Dachteil 2 eine geringfügige, zusätzliche Vorschubbewegung nach vorne, wodurch der Verdeckbezugstoff mit zusätzlicher Spannung beaufschlagt wird.

In Fig. 20 ist die Stützfläche 28, an der die Rolle 27 abrollt, in Einzeldarstellung gezeigt. Zu erkennen sind die beiden Absätze 28a und 28b, die zueinander zumindest annähernd parallel verlaufen, jedoch in Fahrzeuglängsrichtung versetzt zueinander angeordnet sind. Die beiden Absätze 28a, 28b nehmen mit der Fahrzeuglängsachse einen Winkel von 70° bis 80° ein. Der Übergang zwischen den beiden Absätzen 28a und 28b ist stetig, so dass beim Abrollen der Rolle und im Übergang vom ersten zum zweiten Absatz eine gleichmäßige Rollenbewegung erreicht wird.

Der erste Absatz 28a, der von der Rolle 27 bei der Schließbewegung des Faltdaches zuerst erreicht wird, weist eine geringere Länge auf als der zweite Absatz 28b, an dem die Rolle in der Schließposition des Faltdaches anliegt. Die Rolle 27 gelangt in Kontakt mit dem ersten Absatz 28a, wenn während des Schließvorganges des Faltdaches der Kniehebel 14 axial in den Bereich der Stützfläche 28 gelangt. Umgekehrt rollt die Rolle 27 beim Öffnungsvorgang vom zweiten Absatz 28b zum ersten Absatz 28a und verlässt schließlich mit der weiteren Überführungsbewegung in Richtung Öffnungsstellung die Stützfläche 28.

### Bezugszeichenliste

- 1: Faltdach
- 2: vorderes Dachteil
- 3: höhenverstellbarer Querspriegel
- 4: höhenfester Querspriegel
- 5: Verdeckbezugstoff
- 6: hinteres Dachteil
- 7: Antriebseinrichtung
- 8: seitliche Führungsschiene
- 9: seitliche Führungsschiene
- 10: Federelement
- 11: Verschlusskinematik
- 12: Antriebsschlitten
- 13: Steuerschlitten
- 14: Kniehebel
- 15: Trägerteil
- 16: Drehgelenk
- 17: Drehgelenk
- 18: Führungsbolzen
- 19: Führungskulisse
- 20: Führungsbolzen
- 21: Führungskulisse
- 22: Karosserieteil
- 23: Riegelhebel
- 24: Ausnehmung
- 25: Lasche
- 26: Ausnehmung
- 27: Rolle
- 28: Stützfläche
- 28a: Absatz
- 28b: Absatz

## Patentansprüche

1. Verschlusskinematik für ein öffnungsfähiges Faltdach (1) in einem Fahrzeug, wobei das Faltdach (1) ein vorderes Dachteil (2) aufweist, das in seitlichen Führungsschienen (8, 9) längsverschieblich geführt ist und einen Verdeckbezugstoff (5) trägt, wobei die Verschlusskinematik (11) einen in einer Führungsschiene (8, 9) verschieblichen Antriebsschlitten (12) umfasst, der über einen Kniehebel (14) mit einem ver- und entriegelbaren Steuerschlitten (13) gekoppelt ist, wobei der Kniehebel (14) mit einem Trägerteil (15) gekoppelt ist, das Träger des vorderen Dachteils (2) ist, wobei bei der Öffnungsbewegung in einer ersten Bewegungsphase der Steuerschlitten (13) aufbaufest verriegelt und in einer zweiten Bewegungsphase der Steuerschlitten (13) vom Aufbau entriegelt ist **dadurch gekennzeichnet, dass** der Kniehebel (14) über eine Kulissenführung (19) mit dem Antriebsschlitten (12) verbunden ist.

2. Verschlusskinematik nach Anspruch 1,
**dadurch gekennzeichnet,**
**dass** das Trägerteil (15) am vorderen Dachteil (2) über eine Kulissenführung (21) an einem aufbaufesten Kulissenteil (22) geführt ist.

3. Verschlusskinematik nach Anspruch 1 oder 2,
**dadurch gekennzeichnet,**
**dass** der Antriebsschlitten (12) von einer Antriebseinrichtung (7) angetrieben ist.

4. Verschlusskinematik nach einem der Ansprüche 1 bis 3,
**dadurch gekennzeichnet,**
**dass** die Ver- und Entriegelung des Steuerschlittens (13) über ein Riegelelement (23) erfolgt, das am Steuerschlitten (13) angeordnet ist.

5. Verschlusskinematik nach Anspruch 4,
**dadurch gekennzeichnet,**
**dass** das Riegelelement (23) als schwenkbar am Steuerschlitten (13) gelagerter Riegelhebel (23) ausgebildet ist.

6. Verschlusskinematik nach Anspruch 4 oder 5,
**dadurch gekennzeichnet,**
**dass** das Riegelelement (23) in der Verriegelungsposition in eine Ausnehmung (24) in der Führungsschiene (8, 9) einragt.

7. Verschlusskinematik nach einem der Ansprüche 4 bis 6, **dadurch gekennzeichnet,**
**dass** das Riegelelement in der Entriegelungsposition in eine Ausnehmung (24) im Antriebsschlitten (12) einragt.

8. Verschlusskinematik nach einem der Ansprüche 1 bis 7,
**dadurch gekennzeichnet,**
**dass** am Kniehebel (14) eine Rolle (27) gelagert ist, die bei geschlossenem Faltdach (1) an einer aufbauseitigen Stützfläche (28) abgestützt ist.

9. Verschlusskinematik nach Anspruch 8,
**dadurch gekennzeichnet,**
**dass** die Stützfläche (28) an der Führungsschiene bzw. einem mit der Führungsschiene verbundenen Karosserieteil (22) angeordnet ist.

10. Verschlusskinematik nach Anspruch 8 oder 9,
**dadurch gekennzeichnet,**
**dass** die Stützfläche (28) einen ersten Absatz (28a) und einen zweiten, axial versetzten Absatz (28b) aufweist, wobei beim Schließen des Faltdaches (1) die Rolle (27) zunächst in Kontakt mit dem ersten Absatz (28a) und anschließend in Kontakt mit dem zweiten Absatz (28b) gelangt.

11. Faltdach mit einer Verschlusskinematik (11) nach einem der Ansprüche 1 bis 10.

12. Cabriolet-Fahrzeug mit einem Faltdach (1) nach Anspruch 11.

## Claims

1. Closing kinematics for an openable collapsible roof (1) in a vehicle, wherein the collapsible roof (1) has a front roof part (2) which is guided in a longitudinally displaceable manner in lateral guide rails (8, 9) and bears a convertible top cloth material (5), wherein the closing kinematics (11) comprise a drive carriage (12) which is displaceable in a guide rail (8, 9) and is coupled to a lockable and unlockable control carriage (13) via a toggle lever (14), wherein the toggle lever (14) is coupled to a support part (15), which is a support of the front roof part (2), wherein, during the opening movement, the control carriage (13) is locked in a manner fixed to the body in a first movement phase, and the control carriage (13) is unlocked from the body in a second movement phase, **characterized in that** the toggle lever (14) is connected to the drive carriage (12) via a slotted guide mechanism (19).

2. Closing kinematics according to Claim 1, **characterized in that** the support part (15) is guided on the front roof part (2) via a slotted guide mechanism (21) on a slotted guide part (22) fixed to the body.

3. Closing kinematics according to Claim 1 or 2, **characterized in that** the drive carriage (12) is driven by a drive device (7).

4. Closing kinematics according to one of Claims 1 to 3, **characterized in that** the locking and unlocking of the control carriage (13) takes place via a locking element (23) which is arranged on the control carriage (13).

5. Closing kinematics according to Claim 4, **characterized in that** the locking element (23) is designed as a locking lever (23) mounted pivotably on the control carriage (13).

6. Closing kinematics according to Claim 4 or 5, **characterized in that**, in the locking position, the locking element (23) projects into a recess (24) in the guide rail (8, 9).

7. Closing kinematics according to one of Claims 4 to 6, **characterized in that**, in the unlocking position, the locking element projects into a recess (24) in the drive carriage (12).

8. Closing kinematics according to one of Claims 1 to 7, **characterized in that** a roller (27) which, when the collapsible roof (1) is closed, is supported on a body-side supporting surface (28) is mounted on the toggle lever (14).

9. Closing kinematics according to Claim 8, **characterized in that** the supporting surface (28) is arranged on the guide rail or on a bodywork part (22) connected to the guide rail.

10. Closing kinematics according to Claim 8 or 9, **characterized in that** the supporting surface (28) has a first step (28a) and a second, axially offset step (28b), wherein, during closing of the collapsible roof (1), the roller (27) first of all enters into contact with the first step (28a) and subsequently enters into contact with the second step (28b).

11. Collapsible roof with closing kinematics (11) according to one of Claims 1 to 10.

12. Convertible vehicle with a collapsible roof (1) according to Claim 11.

## Revendications

1. Cinématique de fermeture pour un toit pliant (1) ouvrant dans un véhicule, le toit pliant (1) comportant une partie de toit (2) avant guidée de façon à coulisser dans le sens de la longueur dans des rails de guidage (8, 9) latéraux et supporte une matière de revêtement de capote (5), la cinématique de fermeture (11) comprenant un coulisseau d'entraînement (12) coulissant dans un rail de guidage (8, 9) couplé à un coulisseau de commande (13) verrouillable et déverrouillable via un levier à genou (14), le levier à genou (14) étant couplé à une partie de support (15) servant de support de la partie de toit (2) avant, sachant qu'en cas de mouvement d'ouverture dans une première phase de mouvement, le coulisseau de commande (13) est verrouillé fixement à la structure et déverrouillé dans une deuxième phase de mouvement du coulisseau (13) par rapport à la structure, **caractérisée en ce que** le levier à genou (14) est relié au coulisseau d'entraînement en entrée (12) via un guide à coulisse (19).

2. Cinématique de fermeture selon la revendication 1, **caractérisée en ce que** la partie de support (15) située au niveau de la partie de toit (2) avant est guidée via un guide à coulisse (21) situé au niveau d'une partie à coulisse (22) fixe par rapport à la structure.

3. Cinématique de fermeture selon la revendication 1 ou 2, **caractérisée en ce que** le coulisseau d'entraînement (12) est entraîné par un dispositif d'entraînement (7).

4. Cinématique de fermeture selon l'une quelconque des revendications 1 à 3, **caractérisée en ce que** le verrouillage et déverrouillage du coulisseau de commande (13) se produit via un élément de verrouillage (23) disposé au niveau du coulisseau de commande (13).

5. Cinématique de fermeture selon la revendication 4, **caractérisée en ce que** l'élément de verrouillage (23) est réalisé de façon à pouvoir pivoter au niveau du coulisseau de commande (13) des leviers de verrouillage (23) posés.

6. Cinématique de fermeture selon la revendication 4 ou 5, **caractérisée en ce que** l'élément de verrouillage (23) rentre, dans la position de verrouillage, dans un évidement (24) prévu dans le rail de guidage (8, 9).

7. Cinématique de fermeture selon l'une quelconque des revendications 4 à 6, **caractérisée en ce que** l'élément de verrouillage rentre, dans la position de déverrouillage, dans un évidement (24) prévu dans le coulisseau d'entraînement (12).

8. Cinématique de fermeture selon l'une quelconque des revendications 1 à 7, **caractérisée en ce qu'**un rouleau (27) est disposé au niveau du levier à genou (14), ledit rouleau étant appuyé, lorsque le toit pliant (1) est fermé, contre une surface d'appui (28) située du côté de structure.

9. Cinématique de fermeture selon la revendication 8, **caractérisée en ce que** la surface d'appui (28) est disposée contre le rail de guidage et/ou une partie de carrosserie (22) reliée au rail de guidage.

10. Cinématique de fermeture selon la revendication 8 ou 9, **caractérisée en ce que** la surface d'appui (28) comporte un premier épaulement (28a) et un deuxième épaulement (28b) décalé dans le plan axial, le rouleau (27) entrant d'abord en contact avec le premier épaulement (28a) lors de la fermeture du toit pliant (1) puis en contact avec le deuxième épaulement (28b).

11. Toit pliant équipé d'une cinématique de fermeture (11) selon l'une quelconque des revendications 1 à 10.

12. Véhicule cabriolet équipé d'un toit pliant (1) selon la revendication 11.
